# EUROPÄISCHE PATENTSCHRIFT

(11) **EP 0 927 483 B1**
(45) Veröffentlichungstag und Bekanntmachung des Hinweises auf die Patenterteilung: **27.08.2003**
(21) Anmeldenummer: 97929134.1
(22) Anmeldetag: 23.06.1997
(51) Int. Cl.: H04M 1/27

(54) **WÄHLAUTOMATIK**
AUTOMATIC DIALING SYSTEM
DISPOSITIF DE NUMEROTATION AUTOMATIQUE

(43) Veröffentlichungstag der Anmeldung: 07.07.1999
(73) Patentinhaber: ADS Technology Ltd., St. Helier, Jersey JE4 8SD (GB)
(72) Erfinder: IMELAUER, Heinrich, D-81549 München (DE)
(74) Vertreter: Lippich, Wolfgang, Dipl.-Phys, Dr.rer.nat.
(86) Internationale Anmeldenummer: DE9701306
(87) Internationale Veröffentlichungsnummer: WO98059484

(56) Entgegenhaltungen:
- EP-A- 0 675 628
- DE-A- 3 702 509
- US-A- 5 161 184

## Beschreibung

Die Erfindung betrifft ein Mobilfunk-Endgerät für die elektronische Nachrichtenübermittlung in Funknetzen.

Die Auflösung der Postmonopole, vor allen Dingen in Europa, hat dazu geführt, daß eine Vielzahl von Diensten auf dem Markt der Informations- und/oder Datenübermittlung angeboten werden, die durch eine ausschließliche Nutzung nur eines Netzbetreibers nicht optimal genutzt werden können. Dies hat zur Entwicklung von verschiedensten Zubehörgeräten geführt.

In EP 0 675 628 A2 ist eine Vorrichtung offenbart, die sich in die Telefonleitung eines ersten Telefons einschaltet und von dem ersten Telefon ausgehende Telefonanrufe über das Netzwerk zu einem zweiten Telefon auf einem Weg mit minimalen Kosten vermittelt.

Das US-Patent 5,161,184 offenbart ein programmierbares Telefon, das auf Klingeltöne reagiert und nach einer Anzahl von Klingeltönen die Programmierung des Speichers des Telefons erlaubt.

Die Erfindung stellt ein Mobilfunk-Endgerät für die elektronische Nachrichtenübermittlung in Funknetzen bereit, das eine in das Mobilfunk-Endgerät eingebaute Wählautomatik umfaßt, die selbständig die Rufzuteilung zu einem von mindestens zwei möglichen Funknetzen vornimmt, nämlich zu einem Primärfunknetz, zu dem das Mobilfunk-Endgerät automatisch und/oder nach Eingabe einer PIN-Nummer eine Verbindung aufbaut, und zu mindestens einem Sekundärfunknetz. Die Wählautomatik führt abhängig von einer Auswertung nach Auswahlkriterien entweder den Ruf an das Sendeteil des Mobilfunk-Endgeräts und setzt ihn im Primärfunknetz ab oder stellt einen Zugang zu dem Sekundärfunknetz her und führt den Ruf an das Sendeteil des Mobilfunk-Endgeräts und setzt ihn in das Sekundärfunknetz ab. Das Mobilfunk-Endgeräts umfaßt weiter eine Systemkontrolle, über die für die Auswertung erforderlichen Daten, Prozeduren, Zuordnungen und/oder Informationen laufend dem aktuellen Stand anpassbar sind.

Im folgenden werden Begriffe verwendet, die zu ihrem eindeutigen Verständnis einer Erklärung bedürfen. Mobilfunk-Endgeräte sind Geräte, über die Informationen und/oder Daten elektronisch in für den Versand geeignete Signale gewandelt und abgesandt und/oder die empfangenen Informationen und/oder Daten in lesbare und/oder hörbare Informationen und/oder Daten übertragen und empfangen werden. Hierzu zählen z.B. Mobilfunktelefone u.ä..

Unter Wählvorrichtung ist die Einheit zu verstehen, über die die Rufnummer und/oder das Rufzeichen eines Informations- und/oder Datenempfängers eingegeben wird, z.B. Wähltastatur, Nummernspeicher u.ä..

Unter Primärfunknetz ist das Funknetz zu verstehen, zu dem das Mobilfunk-Endgerät automatisch und/oder nach Eingabe einer PIN-Nummer (Persönliche Identifikations Nummer) und/oder eines vergleichbaren Codes eine Verbindung aufbaut.

Sekundärfunknetze sind Funknetze, zu denen ein Zugang - nach der Einwahl in das Primärfunknetz - erst durch geeignete Maßnahmen und/oder Wählvorgänge hergestellt wird.

Netzbetreiber sind Inhaber von
- Eigentums- und/oder
- Betriebs- und/oder
- Nutzungs- und/oder
- Verwertungs- und/oder
- Installationsrechten
entsprechend nationaler und/oder internationaler Regeln und/oder Abkommen.

Dienste-Anbieter können sowohl Vertriebs- oder Verwertungsorganisationen eines Netzbetreibers, als auch Unternehmen sein, die die Leistungen der Netzbetreiber sowie mögliche eigene Zusatzleistungen anbieten.

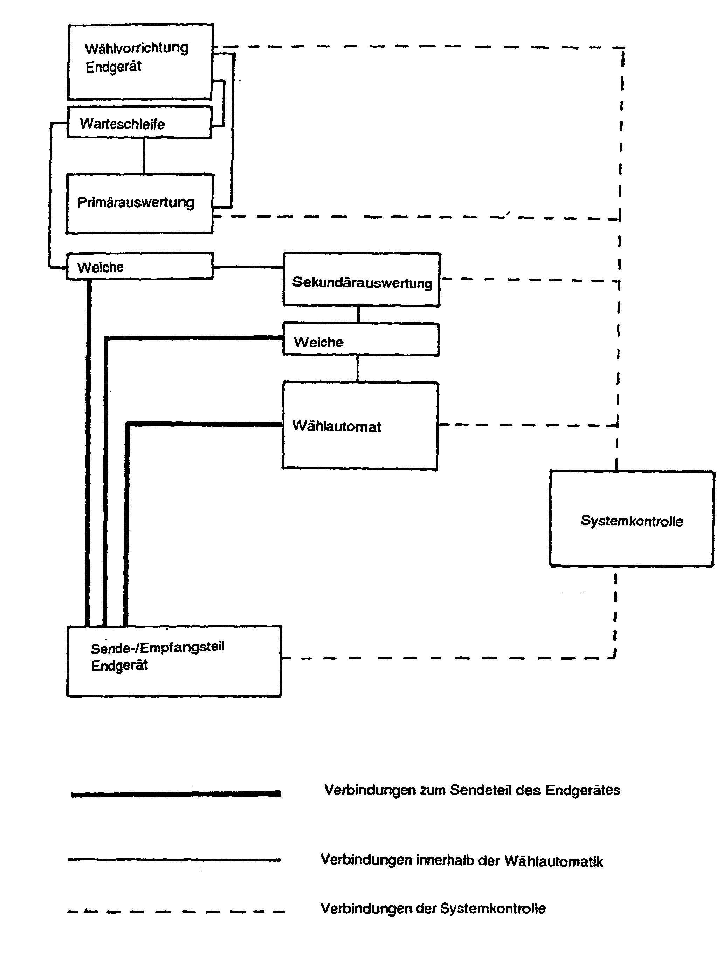

In der einzigen Figur ist eine Ausführungsform des Mobilfunk-Endgeräts schematisch dargestellt.

Die Wählautomatik besteht aus folgenden "Bausteinen":
1. Warteschleife für die über die Wählvorrichtung eingegebene Rufnummer.
2. Primärauswertung für die über die Wählvorrichtung eingegebene Rufnummer.
3. Weiche für die Weiterleitung des Rufes entweder
   a) in das Primärfunknetz oder
   b) zur weiteren Auswertung in die Sekundärauswertung.
4. Sekundärauswertung.
5. Weiche für die Weiterleitung des Rufes entweder
   a) in das Primärfunknetz oder
   b) in die Wählautomatik.
6. Wählautomat für die Einwahl in ein Sekundärfunknetz, das Absetzen des Rufes in das Sekundärfunknetz mit dem Verbindungsaufbau.
7. Systemkontrolle zur laufenden Anpassung.

Die über die Wählvorrichtung des Mobilfunk-Endgerätes eingegebene Rufnummer wird in einer Warteschleife abgespeichert. Gleichzeitig findet in der Primärauswertung eine Entscheidung über die weitere Führung des Rufes aus der Warteschleife entweder
- direkt an das Sendeteil des Mobilfunk-Endgerätes oder
- zur weiteren Auswertung an die Sekundärauswertung statt. Diese erste Zuordnung erfolgt aufgrund der Erkennung, ob es sich bei dem Ruf um
- einen Notruf
- einen Ruf an einen im Primärfunknetz angebotenen Servicedienst wie z.B. "Mailbox", Auskunft, Zeitansage o.ä.
handelt. Diese Liste erhebt keinen Anspruch auf Vollständigkeit, zumal es sich hierbei auch um Netzbetreiber-spezifische Daten handelt. Sie soll nur die Grundzüge der Primärauswertung deutlich und verständlich machen.

Wird der Ruf an die Sekundärauswertung weitergeleitet, erfolgt in dieser eine Auswertung nach folgenden Gesichtspunkten
- Tag des Rufes (Sonn-, Feiertag, Werktag)
- Uhrzeit des Rufes
- Inlandsgespräch
- Auslandsgespräch
- unternehmenseigene Leitungen oder Netze
- Tarifpläne von mindestens zwei Netzbetreibern oder Diensteanbietern

Anhand dieser Auswertung erfolgt dann entweder
- Absetzen des Rufes im Primärfunknetz
- Auslösen des automatischen Wahlvorganges in das vorteilhafteste Sekundärfunknetz über die Zugangsnummer, Einwählen der über die Wählvorrichtung eingegebenen Rufnummer in das Sekundärfunknetz, Verbindungsaufbau

Auch die Liste der Auswahlkriterien in der Sekundärauswertung erhebt keinen Anspruch auf Vollständigkeit. Auch hier sollen nur die Grundzüge einer Zuordnung deutlich gemacht werden. Es gelten auch hier die Voraussetzungen der Primärauswertung.

Der Wählautomatik ist eine Systemkontrolle zugeordnet, die es ermöglicht, die für die Bewertung der Rufe relevanten Daten und/oder Wahlprozeduren zu überwachen und diese in den zuständigen Bestandteilen der Wählautomatik, wie der Primärauswertung, der Sekundärauswertung und dem Wählautomaten ständig den laufenden Änderungen anzupassen. Diese Anpassung kann sowohl direkt über die Wählvorrichtung oder eine SIM-Karte in das Endgerät eingegeben werden, oder über einen Ruf zum und/oder vom Diensteanbieter oder Netzbetreiber über das Funknetz angeglichen werden.

## Patentansprüche

1. Mobilfunk-Endgerät für die elektronische Nachrichtenübermittlung in Funknetzen, umfassend
- eine in das Mobilfunk-Endgerät eingebaute Wählautomatik, die derart ausgebildet ist, selbständig die Rufzuteilung zu einem von mindestens zwei möglichen Funknetzen vorzunehmen, nämlich zu einem Primärfunknetz, um dorthin durch das Mobilfunk-Endgerät automatisch und/oder nach Eingabe einer PIN-Nummer eine Verbindung aufzubauen, und zu mindestens einem Sekundärfunknetz, wobei die Wählautomatik derart ausgebildet ist, abhängig von einer Auswertung nach Auswahlkriterien entweder den Ruf an das Sendeteil des Mobilfunk-Endgeräts zu führen und im Primärfunknetz abzusetzen oder einen Zugang zu dem Sekundärfunknetz herzustellen und den Ruf an das Sendeteil des Mobilfunk-Endgeräts zu führen und in das Sekundärfunknetz abzusetzen; und
- eine Systemkontrolle, über die für die Auswertung erforderlichen Daten, Prozeduren, Zuordnungen und/oder Informationen laufend dem aktuellen Stand anpassbar sind.

2. Mobilfunk-Endgerät nach Anspruch 1, bei dem die Anpassung an den aktuellen Stand
i) über direkte Eingabe in das Endgerät über eine Wählvorrichtung des Endgeräts und/oder
ii) über eine SIM-Karte und/oder
iii) durch Anruf vom oder zum Netzbetreiber oder Dienstanbieter über ein Funknetz
erfolgt.

3. Mobilfunk-Endgerät nach Anspruch 1 oder 2, bei dem, wenn mehr als ein Sekundärfunknetz vorhanden ist, die Wählautomatik derart ausgebildet ist, den Zugang zum vorteilhaftesten Sekundärfunknetz herzustellen und den Ruf in dieses Sekundärfunknetz abzusetzen.

4. Mobilfunk-Endgerät nach einem der vorhergehenden Ansprüche, bei dem ein Auswahlkriterium bei der Auswertung die Verfügbarkeit eines unternehmenseigenen Funknetzes ist.

## Claims

1. Mobile-radio terminal for electronic information transmission in radio networks, comprising
- an automatic dialling system that is incorporated in the mobile-radio terminal and that is designed to undertake independently the call allocation to one of at least two possible radio networks, namely to a primary-radio network in order to set up thereto a connection automatically through the mobile-radio terminal and/or after entering a PIN number, and to at least one secondary-radio network, wherein, depending on an evaluation according to selection criteria, the automatic dialling system is designed in such a way as to either convey the call to the transmission section of the mobile-radio terminal and to transmit it in the primary-radio network, or to set up an access to the secondary-radio network and to convey the call to the transmitting section of the mobile-radio terminal and to transmit it to the secondary-radio network, and
- a system control via which the data, procedures, assignments and/or information items necessary for the evaluation can be adapted continuously to the actual state.

2. Mobile-radio terminal according to Claim 1 in which the adaptation to the actual state
i) takes place via direct input into the terminal via a dialling device of the terminal and/or
ii) via an SIM card and/or
iii) by a call from or to the network operator or service provider via a radio network.

3. Mobile-radio terminal according to Claim 1 or 2, in which, if more than one secondary-radio network is present, the automatic dialling system is designed in such a way as to set up access to the most advantageous secondary-radio network and to transmit the call to said secondary-radio network.

4. Mobile-radio terminal according to any one of the preceding claims, in which a selection criterion in the evaluation is the availability of a proprietary radio network.

## Revendications

1. Terminal radio mobile pour la transmission électronique d'informations dans des réseaux hertziens, comprenant:
- un système de sélection automatique, qui est incorporé dans le terminal radio mobile et qui est agencé de manière à réaliser automatiquement l'affectation d'appels à l'un d'au moins deux réseaux hertziens possibles, à savoir à un réseau hertzien primaire, pour établir automatiquement et/ou après introduction d'un numéro PIN une liaison dans ce réseau au moyen du terminal radio mobile, et au moins un réseau hertzien secondaire, le dispositif de sélection automatique étant agencé de manière à envoyer l'appel à la partie du terminal radio mobile et l'insérer dans le réseau primaire, en fonction d'une évaluation selon des critères de sélection, ou établir un accès au réseau hertzien secondaire et envoyer l'appel à la partie d'émission du terminal radio mobile et l'insérer dans le réseau hertzien secondaire; et
- une unité de contrôle du système, au moyen de laquelle des données, procédures, associations et/ou informations, nécessaires pour l'évaluation, peuvent être adaptées en permanence à l'état actuel.

2. Terminal radio mobile selon la revendication 1, dans lequel l'adaptation à l'état actuel s'effectue
i) au moyen d'une introduction directe dans le terminal par l'intermédiaire d'un dispositif de sélection du terminal et/ou
ii) par l'intermédiaire d'une carte SIM et/ou
iii) par appel en provenance ou en direction d'un exploitant du réseau ou d'un prestataire de services, par l'intermédiaire d'un réseau hertzien.

3. Terminal radio mobile selon la revendication 1 ou 2, dans lequel, lorsque plus d'un réseau hertzien secondaire est présent, le système de sélection automatique est agencé de manière à établir l'accès au réseau hertzien secondaire le plus avantageux et insérer l'appel dans ce réseau hertzien secondaire.

4. Terminal radio mobile selon l'une des revendications précédentes, dans lequel un critère de sélection lors de l'évaluation est la disponibilité d'un réseau hertzien propre à l'entreprise.
